# EUROPÄISCHE PATENTSCHRIFT

(11) **EP 1 152 581 B1**
(45) Veröffentlichungstag und Bekanntmachung des Hinweises auf die Patenterteilung: **21.02.2007**
(21) Anmeldenummer: 01105610.8
(22) Anmeldetag: 06.03.2001
(51) Int. Cl.: H04L 29/06

(54) **Method for ensuring the quality of service for connections between parties from a packet network comprising a ressource manager**
Verfahren zum Sichern der Dienstgüte von Verbindungen zwischen Teilbereichen eines paketorientierten Netzes mit einem Ressourcenmanager
Méthode pour assurer la qualité de service des connections entre parties d'un réseau de paquets avec un contrôleur de ressources

(30) Priorität: 03.05.2000 DE 10021502
(43) Veröffentlichungstag der Anmeldung: 07.11.2001
(73) Patentinhaber: SIEMENS AKTIENGESELLSCHAFT, 80333 München (DE)
(72) Erfinder: Hierholzer, Peter, Dipl.-Ing., 82407 Wielenbach (DE); Klaghofer, Karl, Dipl.-Ing., 81373 München (DE); Müller, Harald, Dr., 82205 Gilching (DE); Prehofer, Christian, Dr., 81477 München (DE); Glasmann, Josef, 85276 Pfaffenhofen (DE)

(56) Entgegenhaltungen:
- EP-A- 0 989 705
- WO-A-99/53719
- WO-A2-98/59467
- GB-A- 2 331 659
- STUDYGROUP 16: "Annex N of H.323 - End to End QoS Control and Signalling in H.323 systems" ITU TELECOMMUNICATION STANDARDIZATION SECTOR. TEMPORARY DOCUMENT 126 REV1, XX, XX, 7. Februar 2000 (2000-02-07), Seiten 1-56, XP002169185
- TOGA J.: 'Proposals and general comments for Inter-Gatekeeper Communications: Proposal for Annex G' INTERNET CITATION, [Online] 08 Juni 1998, Seiten 1 - 9, XP002207082 Gefunden im Internet: <URL:http://standards.pictel.com/ftp/avc-si te/till_0012/9806_Can/9806_Can.htm> [gefunden am 2002-07-22]

## Beschreibung

In verbindungslosen, paketorientierten Netzen, wie zum Beispiel im Internet oder Netzen gemäß dem ITU-T Standard H.323, wird für Verbindungen zwischen Endgeräten dieser Netze keine Dienstgüte bzw. Quality of Service, garantiert. Die Dienstgüte umfasst auch die Bandbreite bzw. die Übertragungsgeschwindigkeit, die für eine Verbindung bereitgestellt wird.

Bei einer Daten- oder Sprachübertragung in lokalen Netzen, das heisst in paketorientierten Netzen, wird die Dienstgüte durch eine Überdimensionierung der übertragungstechnischen Ressourcen gesichert, da hohe Bandbreiten in lokalen Netzen wirtschaftlich günstig realisierbar sind. Häufig werden Teilbereiche von lokalen Netze - beispielsweise firmeninterne Kommunikationsnetze - zu weiteren lokalen Netzen - mehrere Zweigstellen mit mehreren Unterzweigstellen - miteinander verbunden. Da die Teilbereiche der lokalen Netze meist an geographisch unterschiedlichen Orten realisiert sind, sind für die Verbindungen zwischen diesen Teilbereichen meist Mietleitungen vorgesehen. Um bei über diesen zwischen den Teilbereichen geführten Verbindungsstrecken eine ausreichende Dienstgüte zu sichern, dürfen nur so viele Verbindungen über diese Verbindungsstrecke zwischen den Netzen geführt werden, wie übertragungstechnische Ressourcen zur Verfügung stehen, wobei für jede Verbindung während der Verbindungsinitialisierung eine übertragungstechnische Ressource beantragt wird. In den meisten Anwendungen sind zentrale Einheiten vorgesehen, die die Verbindungen innerhalb eines Teilbereichs koordinieren und kontrollieren. Beispielsweise sind in einem paketorientierten Multimedia-Kommunikationssystem gemäß dem ITU-T Standard H.323 für die Teilbereiche jeweils Gatekeeper angeordnet, die Daten- und Sprachverbindungen - bei Anschluss ans Internet auch Voice-over-Internet-Verbindungen - steuern und kontrollieren. Da für jede Verbindung eine häufig über mehrere Teilbereiche geführte Route durch das Netz vorgesehen ist, ist es aufwendig, über die Datenwege aller Verbindungen auch über die jeweiligen Teilbereiche hinweg die Bandbreite für jede einzelne Verbindung zu kontrollieren. Hierzu ist das Wissen über die exakten Vermittlungswege der Verbindungen innerhalb der Teilbereiche bzw. innerhalb des lokalen Netzes erforderlich. In den Gatekeepern der Multimedia-Kommunikationssysteme gemäß dem Standard H.323 ist jedoch auf Grund des sehr hohen Aufwandes eine derartige Realisierung nicht wirtschaftlich.

Eine weitere Alternative, die Dienstgüte bei Verbindungen, die zwischen Teilbereichen eines lokalen Netzes geführt werden, zu sichern, besteht in der Überdimensionierung der Verbindungsstrecken zwischen den Teilbereichen des lokalen Netzes. Eine derartige Lösung erfordert einen hohen zusätzlichen technischen und damit auch wirtschaftlichen Aufwand.

Die Druckschriften WO 99/53719, WO 98/59467, "Proposals and general comments for inter-gatekeeper communications: Proposal for annex G" von Jim Toga, veröffentlicht am 8. Juni 1998 und GB-A-2 331 659 offenbaren verschiedene Prinzipien, die eine Verwaltung von übertragungstechnischen Ressourcen in Netzwerken betreffen. Dabei kann beispielsweise in den Verfahren von WO 99/53719 ein Abwarten eines Ablaufs einer Zeitspanne erforderlich sein, bevor die erfolgreiche Bandbreiten-Reservierung von allen Verbindungsstrecken eines Übertragungspfads bestätigt wird. Außerdem ist aus WO 98/59467 bekannt, für alle registrierten Endpunkte eines Teilbereichs eines lokalen Netzes eine Adressregistrierung durchzuführen. Je nach Ausgestaltung und insbesondere bei weitläufigen Netzwerken mit vielen Netzelementen innerhalb der jeweiligen Teilbereiche können sich diese Prinzipien dabei als aufwendig erweisen und/oder können sich Verzögerungen bis zur abschließenden Dienstgütesicherung einstellen.

Die der Erfindung zugrundeliegende Aufgabe besteht darin, ein vereinfachtes Verfahren zur Dienstgütesicherung für Verbindungen, die meist über mehrere Teilbereiche eines paketorientierten Netzes über Verbindungsstrecken mit vorgegebenen übertragungstechnischen Ressourcen geführt werden, anzugeben. Die Erfindung wird durch die Merkmale des Anspruch 1 gelöst.

Der wesentliche Aspekt des erfindungsgemäßen Verfahrens besteht darin, dass in dem paketorientierten Netz ein Ressourcenmanager angeordnet ist, dem Informationen über Adressenbereiche der Teilbereiche, Routen, ausgehend von den jeweiligen Teilbereichen über Teilbereiche zu weiteren Teilbereichen, und die vorgegebenen übertragungstechnischen Ressourcen zwischen den Teilbereichen zugeordnet sind. Bei einer Initialisierung einer Verbindung wird dem Ressourcenmanager der angeforderte Ressourcenumfang sowie die Ursprungs- und Zieladresse signalisiert, sowie die Route durch das Netz ermittelt und unter Berücksichtigung des angeforderten Ressourcenumfangs und dem Ressourcenumfang zwischen den Teilbereichen der Route überprüft, ob die initialisierte Verbindung zugelassen wird. Bei Zulassung der Verbindung wird eine Mitteilung an einen Router, über den einer der Teilbereiche mit einer der Verbindungsstrecken zwischen den Teilbereichen verbunden ist, zum Reservieren der übertragungstechnischen Ressourcen übermittelt. Vorteilhaft werden in den in die ermittelte Route einbezogenen Teilbereichen die übertragungstechnischen Ressourcen für die initialiserte Verbindung reserviert - Anspruch 2. Ein wesentlicher Vorteil des erfindungsgemäßen Verfahrens ist darin zu sehen, dass ein sehr abstraktes Topologie-Modell des Netzes im Ressourcenmanager gespeichert ist, mit dessen Hilfe insbesondere die übertragungstechnischen Ressourcen der zwischen den Teilbereichen angeordneten Verbindungsstrecken überwacht und damit die Dienstgüte der über die Verbindungsstrecken geführten Verbindungen gesichert wird. Der Ressourcenmanager kann zentral im Netz in einem der Teilbereiche angeordnet sein und wird von den in den Teilbereichen vorgesehenen Verbindungssteuerungen - z.B. Gatekeeper in H.323-Netzen - bei der Initialisierung einer Verbindung in die Signalisierung einbezogen. Hierdurch wird aufgrund des einfachen, abstrakten Topologiemodells der verwaltungstechnische und damit der wirtschaftliche Aufwand verringert und zusätzlich die Ermittlungszeit, d.h. die Überprüfungszeit für die Zulassungskontrolle einer Verbindung erheblich verkürzt.

Nach einer Weiterbildung des erfindungsgemäßen Verfahrens sind die Teilbereiche des Netzes in weitere Unterbereiche unterteilt, wobei den weiteren Unterbereichen jeweils ein Teil der übertragungstechnischen Ressourcen der zumindest einen Verbindungsstrecke (VS) zugeordnet ist. Hierdurch können für unterschiedliche Dienste - z.B. Sprach- und Datendienst - die Dienstgüte bzw. die vorgegebenen übertragungstechnischen Ressourcen je Dienst unterschiedlich bestimmt werden.

Vorteilhaft stellt das paketorientierte Netz das Internet oder ein Zugangsnetz zum Internet dar - Anspruch 4. Hierbei sind die Adressenbreiche der Teilbereiche durch Teilbereiche einer Internet-Adresse repräsentiert - Anspruch 5. Bevorzugt sind die ersten Bereiche der Internetadresse für die Zuordnung zu den Teilbereichen vorgesehen.

Vorteilhaft sind im Ressourcenmanager in einer Tabelle für die Routen jeweils eine Information über den Ursprungs-Teilbereich, eine Information über den Ziel-Teilbereich, Informationen über die dazwischen liegenden Teilbereiche und Informationen über die zwischen den Teilbereichen der jeweiligen Routen angeordneten Verbindungsstrecken angegeben - Anspruch 6.

Nach einer weiteren vorteilhaften Ausgestaltung des erfindungsgemäßen Verfahrens werden die vorgegebenen übertragungstechnischen Ressourcen zwischen den Teilbereichen in dienstespezifische vorgegebene übertragungstechnische Teilressourcen unterteilt, wobei bei der Zulassungsüberprüfung einer initialisierten, einem bestimmten Dienst zugeordneten Verbindung die dienstespezifische Teilressource berücksichtigt wird - Anspruch 7. Hierdurch wird eine dienstespezifische Nutzung der übertragungstechnischen Ressourcen der Verbindungsstrecken möglich.

Im Ressourcenmanager werden vorteilhaft die durch die initialisierten Verbindungen angeforderten und zugelassenen übertragungstechnischen Ressourcen für jede Verbindungsstrecke zwischen den Teilbereichen summiert und eine initialisierte Verbindung, deren angeforderte übertragungstechnische Ressource die vorgegebenen übertragungstechnischen Ressourcen einer in der ermittelten Route angeordneten Verbindungsstrecke unter Berücksichtigung der summierten übertragungstechnischen Ressourcen übersteigt, wird nicht zugelassen - Anspruch 8. Wird eine Verbindung beendet, so werden die übertragungstechnischen Ressourcen der über die betreffenden Verbindungsstrecken geführten Verbindung wieder subtrahiert, d.h. wieder für andere Verbindungen freigegeben.

Weitere vorteilhafte Ausgestaltungen des erfindungsgemäßen Verfahrens sind den weiteren Ansprüchen zu entnehmen.

Im folgenden wird das erfindungsgemäße Verfahren anhand einer Zeichnung näher erläutert.

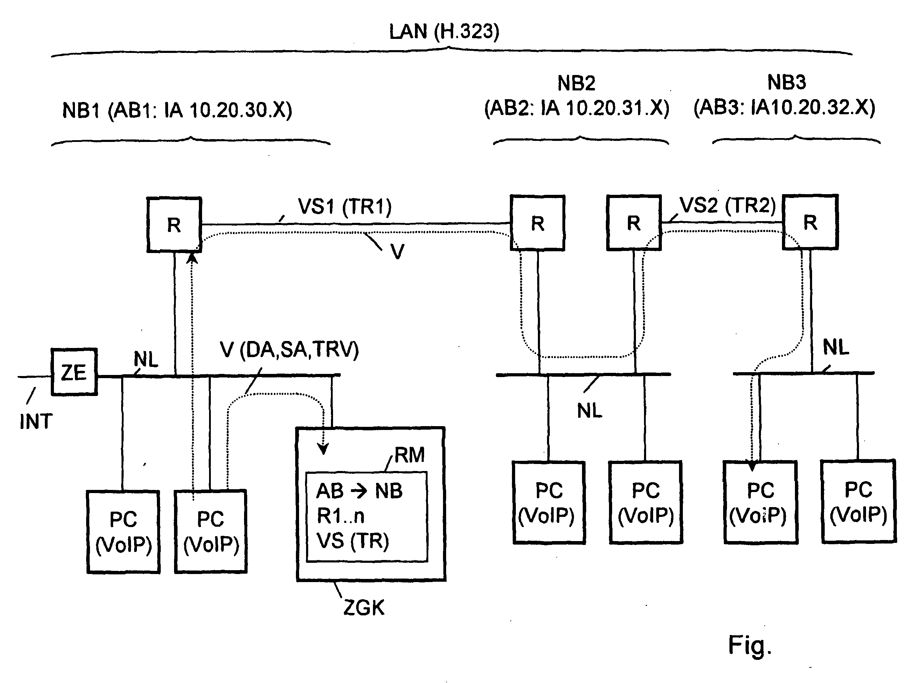

Die Figur zeigt ein paketorientiertes Netz, insbesondere ein paketorientiertes lokales Netz LAN, das durch drei Teilbereiche NB1..3 gebildet ist. Der erste und der zweite sowie der zweite und der dritte Teilbereich NB1..3 ist jeweils über eine erste und zweite Verbindungsstrecke VS1,2 verbunden, wobei die Verbindungsstrecken VS1,2 in den jeweiligen Teilbereichen NB1..3 an einen Router R angeschlossen sind. Der Router R stellt das Bindeglied zwischen dem Übertragungsnetz NL des jeweiligen Teilbereichs NB1,2 des lokalen Netzes LAN dar. Mit Hilfe des Routers R werden die Pakete, die an einen weiteren Teilbereich NB1..3 übermittelt werden, anhand der in den Paketen angegebenen Ursprungs- und Zieladressen SA,DA erkannt und durch diesen vermittelt. Beim Ausführungsbeispiel sei angenommen, dass es sich um ein busförmig ausgestaltetes lokales Netz LAN handelt, wobei die busförmig ausgestalteten Übertragungsstrecken NL der Teilbereiche NB1..3 über die Router R und die Verbindungsstrecke VS verbunden sind.

An die Übertragungsstrecken NL der Teilbereiche NB1..3 sind des weiteren als Personal Computer PC ausgestaltete Endgeräte angeschlossen. Für das Ausführungsbeispiel sei weiterhin angenommen, dass das lokale Netz LAN bzw. die Teilbereiche NB1..3 gemäß dem ITU-T-Standard H.323 ausgestaltet sind und für die Verbindungssteuerung und Überwachung in dem ersten Teilbereich NB1 ein zentraler Gatekeeper ZGK angeordnet ist, der diese Funktionen für die drei Teilbereiche NB1..3 wahrnimmt.

Bei dem ersten Teilbereich NB1 handelt es sich beispielsweise um das zentrale Kommunikationsnetz einer Firmenzentrale und beim zweiten Teilbereich NB2 um eine Zweigstelle dieser Firma und der dritte Teilbereich NB3 stellt ein Subnetz der Zweigstelle dar. Für das Ausführungsbeispiel sei weiterhin angenommen, dass die Teilbereiche NB1..3 des lokalen Netzen LAN über eine im ersten Teilbereich NB1 angeschlossene Zugangseinrichtung ZE mit dem Internet INT verbunden sind. Dies bedeutet, dass neben den Internet-Verbindungen auch Voice o-ver Internet-Verbindungen VoIP unter den Personalcomputern PC oder zum Internet INT initialisiert und geführt werden. Das lokale Netz LAN kann auch eine Teilbereich des Internet INT sein, wobei die Zugangseinrichrichtung ZE dann entfallen kann.

Jedem der Endgeräte bzw. Personalcomputer PC, sowie dem zentralen Gatekeepter ZGK ist sowohl eine physikalische Schicht-2-Adresse und eine Internetadresse IA zugeordnet. Für Übermittlung von Sprachinformationen innerhalb des lokalen Netzes LAN, als auch an das oder vom Internet INT ist in den Endgeräten bzw. Personal Computern PC jeweils eine Voice Over Internet-Funktion VoIP realisiert.

Erfindungsgemäß ist im Netz, beim Ausführungsbeispiel im lokalen Netz LAN, ein Ressourcenmanager RM vorgesehen. Der Ressourcenmanager RM ist bei Ausführungsbeispiel vorteilhaft im zentralen Gatekeeper ZGK realisiert - alternativ kann er auch dem Gatekeeper ZPK als Server zugeordnet werden. Sind mehrere Gatekeeper in den Teilbereichen NB1..3 vorgesehen, so ist der Ressourcenmanager RM einem dieser Gatekeeper zuzuordnen, wobei der Ressourcenmanager RM auch in einem anderen Teilbereich NB beispielsweise als Server angeordnet sein kann.

Im Ressourcenmanager RM ist eine Tabelle vorgesehen, die in weitere Teiltabellen über die Adressenbereiche AB der Teilbereiche NB1..3, über die möglichen Routen R1..n zwischen den Teilbereichen NB1..3 und über die zwischen den Teilbereichen NB1..3 verfügbaren übertragungstechnischen Ressourcen TR unterteilt ist. Die Teiltabellen sind wie folgt ausgestaltet:

### Adressenbereiche AB der Teilbereiche NB1..3:

Für die Definition der Adressenbereiche AB werden die ersten Teilbereiche der Internetadresse IA bevorzugt. Die durch X bezeichneten Bereiche können beliebige Ziffernkombinationen darstellen.

| Adressenbereich AB | Teilbereich NB |
|---|---|
| 10.20.30.X | NB1 |
| 10.20.31.X | NB2 |
| 10.20.31.X | NB3 |

### Routen R1..n :

Die Teiltabelle gibt den Ursprungs- und den Ziel-Teilbereich NB1..3 und den Teilbereich NB1..3 an, an welchen die initialisierte Verbindung V zunächst signalisiert wird.

| Ursprungs-NB | Ziel-NB | nächster NB | VS |
|---|---|---|---|
| NB1 | NB2 | NB2 | VS1 |
| NB1 | NB3 | NB2 | VS1 |
| NB2 | NB3 | NB3 | VS2 |
| NB2 | NB1 | NB1 | VS1 |
| NB3 | NB2 | NB2 | VS2 |
| NB3 | NB1 | NB2 | VS2 |

### Verbindungsstrecken VS1,2:

Hier sind diejenigen übertragungstechnischen Ressourcen TR eingetragen, die aktuell verfügbar sind, die durch andere Verbindungen V belegten übertragungstechnischen Ressourcen TR sind jeweils von den vorgegebenen maximalen übertragungstechnischen Ressourcen TR subtrahiert. Analog hierzu werden beim Ende einer Verbindung V die frei werdenden übertragungstechnischen Ressourcen TR1,2 der in die beendete Verbindung V einbezogenen Verbindungsstrecken VS1,2 wieder subtrahiert, d.h. wieder für weitere Verbindungen V freigegeben.

| TR | NB | NB | übertragungstechnische Ressourcen TR |
|---|---|---|---|
| 1 | NB1 | NB2 | 2000 kbit/s |
| 2 | NB2 | NB3 | 200 kbit/s |

Im Rahmen einer von einem Personalcomputer PC initialisierten Verbindung V wird diese Verbindung V beim zentralen Gatekeeper ZGK signalisiert bzw. angezeigt. Hierbei ist eine Ziel- und eine Ursprungsadresse DA, SA in den Header des die Initialisierung anzeigenden Pakets eingetragen. Da der zentrale Gatekeeper ZGK für die drei Teilbereiche NB1..3 zuständig ist, werden sowohl vom ersten, zweiten und dritten Teilbereich NB1..3 initialisierte Verbindungen V an den zentralen Gatekeeper ZGK signalisiert. Des weiteren wird an den Gatekeeper ZGK signalsiert, dass die initialisierte Verbindung V eine Bandbreite von beispielsweise 64 kbit/s aufweisen soll.

Im zentralen Gatekeeper ZGK wird anhand der Ziel- und Ursprungsadresse SA,DA und der Teiltabelle über die Adressenbereiche AB der Teilbereiche NB1..3 ermittelt, in welchem Teilbereich NB1..3 sich die Personalcomputer PC befinden. Anschließend wird anhand der Teiltabelle über die Routen R1..n die betreffende Route oder Routen R1..n durch ggfs. schrittweises Vorgehen in der Tabelle ermittelt. Hierbei werden auch die benutzten Verbindungsstrecken VS1,2 angegeben. In der Teiltabelle Verbindungsstrecken VS wird überprüft, ob die aktuell verfügbaren übertragungstechnischen Ressourcen TR1,2 für die initialisierte Verbindung V mit einer angeforderten übertragungstechnischen Ressource (TRV) bzw. einer Übertragungsgeschwindigkeit von 64 kbit/s ausreicht. Entsprechend dem Überprüfungsergebnis wird die initialisiert Verbindung V durch eine Mitteilung an den die Verbindung V initialisierenden Personalcomputer PC entweder zugelassen oder abgewiesen. Bei einer Zulassung der Verbindung V werden die übertragungstechnischen Ressourcen TR1,2 in den Routern R durch eine entsprechende Mitteilung an die Router R und ggf. in der Zugangseinrichtung ZE reserviert. In den Routern R wird daraufhin ein Paket dieser Verbindung V an die jeweilige Verbindungsstrecke VS1,2 vermittelt. Wird beispielsweise von einem Personalcomputer PC vom ersten Teilbereich NB1 zu einem Personalcomputer PC im dritten Teilbereich NB3 eine Verbindung V mit einer Bandbreite von 64 kbit/s initialisiert, so wird aufgrund den in der Teiltabelle Verbindungsstrecke VS1,2 angegebenen noch freien übertragungstechnischen Ressourcen TR1,2 von 2000 kbit/s bzw. 200 kbit/s die Verbindung zugelassen, wobei die Routen R..1 durch ein schrittweises Vorgehen in der Teiltabelle Routen 1..n ermittelt werden. Nach dem Initialisieren der Verbindung V werden in der Teiltabelle Verbindungsstrecken VS1,2, die durch die Verbindung V belegten übertragungstechnischen Ressourcen TR1,2 subtrahiert. Wird eine Verbindung beendet, so werden die durch die Verbindung V belegten übertragungstechnischen Ressourcen TR1,2 je nach belegter Verbindungsstrecke VS12, wieder addiert.

Um bestimmte Dienste, beispielsweise den Voice over Internet-Dienst VoIP zu bevorzugen, kann einer Gruppe von Personalcomputern PC innerhalb eines Teilbereichs NB des lokalen Netzes LAN eine Priorität zugeordnet werden. Diese Zuordnung von Prioritäten kann dadurch erreicht werden, dass die Teilbereiche NB1,2 in weitere Teilbereiche unterteilt werden, und diese unterteilten Teilbereiche NB bevorzugt, das heisst, priorisiert bei der Verbindungssteuerung im zentralen Gatekeeper ZGK und in den Routern R behandelt werden.

Sind mehrere Verbindungsstrecken VS zwischen den Teilbereichen NB vorgesehen, so können für jede der Verbindungsstrecken VS die vorgegebenen bzw. maximal verfügbaren übertragungstechnischen Ressourcen TR in der Tabelle Verbindungsstrecken VS gespeichert werden. Hierbei kann beispielsweise bei einer weiteren Untergruppe der Teilbereiche NB1..3 jeder Untergruppe eine Verbindungsstrecke VS oder Teile der übertragungstechnischen Ressourcen TR der Verbindungsstrecken VS zugeordnet werden. Alternativ können die übertragungstechnischen Ressourcen TR aller Verbindungsstrecken VS als einzige übertragungstechnische Ressource für Verbindungen von einem Teilbereich NB1 zum anderen Teilbereich NB2 angegeben werden.

Die Teilbereiche des Netzes NB1..2 können in weitere Unterbereiche - in der Figur nicht dargestellt - unterteilt werden, wobei den weiteren Unterbereichen jeweils ein Teil der übertragungstechnischen Ressourcen (TR1,2) der Verbindungsstrecken VS1,2 zugeordnet ist. Diese Unterteilung wird insbesondere in der Teiltabelle der Verbindungsstrecken VS1,2 angegeben. Hierdurch kann für unterschiedliche Dienste - z.B. Sprachdienst, beispielsweise Voice over Internet und Datendienst - die Dienstgüte bzw. die vorgegebenen übertragungstechnischen Ressourcen je Dienst unterschiedlich bestimmt werden.

Das erfindungsgemäße Verfahren kann auch auf einen Teil der übertragungstechnischen Ressourcen TR1,2 der Verbindungsstrecken VS1,2 beschränkt werden. Hierbei wird nur ein Teil der übertragungstechnischen Ressourcen TR1,2 durch den Ressourcenmanager RM verwaltet. Die Pakete, die diesen Teil der übertragungstechnischen Ressourcen TR1,2 nutzen dürfen, sind mit bestimmten Bits markiert. Beispielsweise werden im lokalen Netz LAN die Hälfte der übertragungstechnischen Ressourcen TR1,2 für Sprachpakete, z.B. Voice over Internet- Pakete reserviert, die im Internet-Header mit einem bestimmten Bit markiert sind.

Das erfindungsgemäße Verfahren bzw. der erfindungsgemäße Ressourcenmanager ist nicht auf dieses Ausführungsbeispiel beschränkt, sondern kann in allen paketorientierten Netzen eingesetzt werden, das eine Mehrzahl von geographisch unterschiedlich angeordnete Teilbereiche aufweist, wobei die Teilbereiche durch unterschiedliche Verbindungsstrecken miteinander verbunden sein können - beispielsweise optische Verbindungsstrecken oder Funkstrecken oder Infrarotstrecken. Des weiteren kann das erfindungsgemässe Verfahren in durch Teilbereichs-Steuerungen in jedem der Teilbereiche oder auch in einer zentralen Steuerung für das vollständige paketorientierte Netz realisiert werden. Hierbei sind lediglich Anpassung an die in den Teilbereichen bzw. bzw. im paketorientierten Netz verwendeten Übermittlungprotokolle bzw. Initialisierungsprozeduren erforderlich.

## Patentansprüche

1. Verfahren zur Sicherung der Dienstgüte von Verbindungen (V) zwischen zumindest zwei Teilbereichen (NB1..3) eines paketorientierten Netzes (LAN), wobei Verbindungsstrecken (VS1,2) zwischen Teilbereichen (NB1,2) einen vorgegebenen übertragungstechnischen Ressourcenumfang (TR1, 2) aufweisen,
- mit einem im paketorientierten Netz (LAN) angeordneten Ressourcenmanager (RM), dem Informationen über
-- Adressenbereiche (AB) der Teilbereiche (NB1..3),
-- Routen (R1, ,n), ausgehend von den jeweiligen Teilbereichen (NB1..3) über Teilbereiche (NB1..3) zu weiteren Teilbereichen (NB1..3), und
-- die übertragungstechnischen Ressourcen (TR) zwischen den Teilbereichen (NB1..3) zugeordnet sind,
- bei dem bei einer Initialisierung einer Verbindung (V) dem Ressourcenmanager (RM) der angeforderte Ressourcenumfang sowie die Ursprungs- und Zieladresse (SA,DA) signalisiert werden,
- bei dem anhand der signalisierten Ursprungs- und Zieladresse (SA,DA) und der Informationen über die Adressenbereiche (AB) der Teilbereiche (NB1..3) ermittelt wird, in welchen jeweiligen Teilbereichen sich Ursprung und Ziel der Verbindung (V) befinden,
- bei dem im Ressourcenmanager (RM) anhand des ermittelten Ursprungs- und Ziel-Teilbereichs die Route durch das Netz (LAN) ermittelt und unter Berücksichtigung der angeforderten Ressource und dem Ressourcenumfang der Verbindungsstrecken zwischen den Teilbereichen (NB1..3) der Route überprüft wird, ob die initialisierte Verbindung (V) zugelassen wird, und
- bei dem bei Zulassung der Verbindung (V) eine Mitteilung an einen Router (R), über den einer der Teilbereiche (NB1..3) mit einer der Verbindungsstrecken zwischen den Teilbereichen (NB1..3) verbunden ist, zum Reservieren der übertragungstechnischen Ressourcen (TR) übermittelt wird.

2. Verfahren nach Anspruch 1,
**dadurch gekennzeichnet,**
**dass** in den in die ermittelte Route einbezogenen Teilbereichen (NB1..3) die übertragungstechnischen Ressourcen (TR1,2) für die initialisierte Verbindung (V) reserviert werden.

3. Verfahren nach einem der Ansprüche 1 oder 2,
**dadurch gekennzeichnet,**
**dass** die Teilbereiche (NB1..3) des Netzes (LAN) in weitere Unterbereiche unterteilt ist, wobei den weiteren Unterbereichen jeweils ein Teil der übertragungstechnischen Ressourcen (TR1,2) der zumindest einen Verbindungsstrecke (VS1,2) zugeordnet ist.

4. Verfahren nach einem der Ansprüche 1 bis 3,
**dadurch gekennzeichnet,**
**dass** das paketorientierte Netz (LAN) das Internet oder ein Zugangsnetz zum Internet darstellt.

5. Verfahren nach Anspruch 4,
**dadurch gekennzeichnet,**
**dass** die Adressenbereiche (AB) der Teilbereiche (NB1..3) durch Teilbereiche (NB1..3) einer Internet-Adresse (IA) repräsentiert sind.

6. Verfahren nach einem der vorhergehenden Ansprüche,
**dadurch gekennzeichnet,**
**dass** im Ressourcenmanager (RM) in einer Tabelle für die Routen (R1..n) jeweils
- eine Information über den Ursprungs-Teilbereich (NB1..3),
- eine Information über den Ziel-Teilbereich (NB1..3),
- Informationen über die dazwischen liegenden Teilbereiche (NB1..3) und
- Informationen über die zwischen den Teilbereichen (NB1..3) der jeweiligen Routen (R1..n) Verbindungsstrecken (VS1,2)
angegeben ist.

7. Verfahren nach einem der vorhergehenden Ansprüche,
**dadurch gekennzeichnet,**
**dass** die vorgegebenen übertragungstechnischen Ressourcen (TR1,2) zwischen den Teilbereichen (NB1..3) in dienstespezifische vorgegebene übertragungstechnischen Teilressourcen unterteilt werden, wobei bei der Zulassungsüberprüfung einer initialisierten, einem bestimmten Dienst zugeordneten Verbindung die dienstespezifische Teilressource berücksichtigt wird.

8. Verfahren nach einem der vorhergehenden Ansprüche,
**dadurch gekennzeichnet,**
**dass** im Ressourcenmanager (RM) die durch die initialisierten Verbindungen (V) angeforderten und zugelassenen übertragungstechnischen Ressourcen (TR) für jede Verbindungsstrecke (VS1,2) zwischen den Teilbereichen (NB1..3) summiert werden, und
**dass** eine initialisierte Verbindung (V), deren angeforderte übertragungstechnischen Ressource (TR) die verfügbaren übertragungstechnischen Ressourcen (TR1,2) einer in der ermittelten Route (R1..n ) angeordneten Verbindungsstrecke (V1,2) unter Berücksichtigung der summierten übertragungstechnischen Ressourcen übersteigt, nicht zugelassen wird.

9. Verfahren nach einem der vorhergehenden Ansprüche,
**dadurch gekennzeichnet,**
**dass** die Zulassung oder Nicht-Zulassung einem die Verbindung initialisierenden Endgerät signalsiert wird.

10. Verfahren nach einem der vorhergehenden Ansprüche,
**dadurch gekennzeichnet,**
**dass** die verfügbaren übertragungstechnischen Ressourcen (TR1,2) durch eine Bandbreiteninformation oder durch eine Anzahl von Verbindungen mit vorgegebener Bandbreiteninformation bestimmt wird.

11. Verfahren nach einem der vorhergehenden Ansprüche,
**dadurch gekennzeichnet,**
**dass** bei mehreren Verbindungsstrecken (VS1,2) zwischen den
Teilbereichen (NB1..3) die übertragungstechnischen Ressourcen (TR1,2) je Verbindungsstrecke (VS1,2) vorgegeben sind und zusammen die vorgegebenen übertragungstechnischen Ressourcen (TR) bilden.

12. Verfahren nach einem der vorhergehenden Ansprüche,
**dadurch gekennzeichnet,**
**dass** den Adressenbereichen (AB) unterschiedliche Übermittlungsprioritäten zugeordnet werden.

13. Verfahren nach einem der vorhergehenden Ansprüche,
**dadurch gekennzeichnet,**
**dass** die Sicherung der Dienstgüte der Verbindungen (V) in zumindest einem der Teilbereiche (NB1..3) für zumindest einen weiteren Teilbereich (NB1..3) durchgeführt wird.

## Claims

1. Method for assuring the quality of service of connections (V) between at least two subregions (NB1..3) of a packet-oriented network (LAN), wherein connection paths (VS1,2) between subregions (NB1,2) have a prescribed scope of transmission system resources (TR1,2),
- having a resource manager (RM) which is arranged in the packet-oriented network (LAN) and has associated information relating to
-- address ranges (AB) of the subregions (NB1..3),
-- routes (R1..n), starting from the respective subregions (NB1..3) via subregions (NB1..3) to other subregions (NB1..3), and
-- the transmission system resources (TR) between the subregions (NB1..3),
- in which, when a connection (V) is initialized, the requested scope of resources and the source and designation addresses (SA, DA) are signalled to the resource manager (RM),
- in which the signalled source and destination addresses (SA, DA) and the information about the address ranges (A, B) of the subregions (NB1..3) are used to ascertain the respective subregions which contain the source and destination for the connection (V),
- in which the resource manager (RM) uses the ascertained source and destination subregions to ascertain the route through the network (LAN) and, taking into account the requested resource and the scope of resources for the connection paths between the subregions (NB1..3), checks the route to determine whether the initialized connection (V) is authorized, and
- in which, if the connection (V) is authorized, a message is sent to a router (R), via which one of the subregions (NB1..3) is connected to one of the connection paths between the subregions (NB1..3), for reserving the transmission system resources (TR).

2. Method according to Claim 1,
wherein
the transmission system resources (TR1, 2) are reserved for the initialized connection (V) in the subregions (NB1..3) included in the ascertained route.

3. Method according to one of Claims 1 or 2,
wherein
the subregions (NB1..3) of the network (LAN) are subdivided into further subregions, the further subregions each having been allocated a portion of the transmission system resources (TR1,2) of the at least one connection path (VS1,2).

4. Method according to one of Claims 1 to 3,
wherein
the packet-oriented network (LAN) is the Internet or an access network to the Internet.

5. Method according to Claim 4,
wherein
the address ranges (AB) of the subregions (NB1..3) are represented by subranges (NB1..3) of an Internet address (IA).

6. Method according to one of the preceding claims,
wherein
the resource manager (RM) has a table for the routes (R1..n) which respectively contains
- an item of information relating to the source subregion (NB1..3),
- an item of information relating to the destination subregion (NB1..3),
- information relating to the subregions (NB1..3) situated in between, and
- information relating to the connection paths (VS1,2) arranged between the subregions (NB1..3) of the respective routes (R1..n).

7. Method according to one of the preceding claims,
wherein
the prescribed transmission system resources (TR1,2) between the subregions (NB1..3) are subdivided into prescribed transmission system partial resources for specific services, with the partial resource for the specific service being taken into account for the authorization check for an initialized connection associated with a particular service.

8. Method according to one of the preceding claims,
wherein
the requested and authorized transmission system resources (TR), which are requested because of the initialized connections (V), are summed in the resource manager (RM) for each connection path (VS1,2) between the subregions (NB1..3), and
wherein an initialized connection (V) whose requested transmission system resource (TR) exceeds the available transmission system resources (TR1,2) of a connection path (V1,2) arranged in the ascertained route (R1..n), taking into account the summed transmission system resources, is not authorized.

9. Method according to one of the preceding claims,
wherein authorization or non-authorization is signalled to a terminal initializing the connection.

10. Method according to one of the preceding claims,
wherein the available transmission system resources (TR1,2) are determined by an item of bandwidth information or by a number of connections having prescribed bandwidth information.

11. Method according to one of the preceding claims,
wherein,
when there are a plurality of connection paths (VS1,2) between the subregions (NB1..3), the transmission system resources (TR1,2) are prescribed for each connection path (VS1,2) and together form the prescribed transmission system resources (TR).

12. Method according to one of the preceding claims,
wherein
different transmission priorities are allocated to the address ranges (AB).

13. Method according to one of the preceding claims,
wherein
the assuring of the quality of service of the connections (V) in at least one of the subregions (NB1..3) is executed for at least one other subregion (NB1..3).

## Revendications

1. Procédé pour assurer la qualité de service de liaisons (V) entre au moins deux parties (NB1...3) d'un réseau orienté paquets (LAN), des trajets de liaison (VS1,2) entre des parties (NB1,2) présentant une étendue donnée de ressources de transmission (TR1,2),
- avec un gestionnaire de ressources (RM) situé dans le réseau orienté paquets (LAN) et auquel sont affectées des informations concernant
-- des zones d'adresses (AB) des parties (NB1...3),
-- des routes (R1,...n) allant des parties respectives (NB1...3) vers d'autres parties (NB1...3) en passant par des parties (NB1...3) et
-- les ressources de transmission (TR) entre les parties (NB1...3),
- dans lequel l'étendue demandée des ressources ainsi que les adresses source et de destination (SA, DA) sont signalées au gestionnaire de ressources (RM) lors d'une initialisation d'une liaison (V),
- dans lequel il est déterminé, à l'aide de l'adresse source et de l'adresse de destination (SA, DA) signalées et des informations concernant les zones d'adresses (AB) des parties (NB1...3), dans quelles parties respectives se trouvent la source et la destination de la liaison (V),
- dans lequel la route à travers le réseau (LAN) est déterminée dans le gestionnaire de ressources (RM) à l'aide de la partie source et de la partie de destination déterminées et il est vérifié, compte tenu de la ressource demandée et de l'étendue des ressources des trajets de liaison entre les parties (NB1...3) de la route, si la liaison initialisée (V) est autorisée et
- dans lequel une communication, si la liaison (V) est autorisée, est transmise à un routeur (R), par l'intermédiaire duquel l'une des parties (NB1...3) est reliée à l'un des trajets de liaison entre les parties (NB1...3), aux fins de la réservation des ressources de transmission (TR).

2. Procédé selon la revendication 1, **caractérisé en ce que** les ressources de transmission (TR1,2) pour la liaison initialisée (V) sont réservées dans les parties (NB1...3) prises en compte dans la route déterminée.

3. Procédé selon l'une des revendications 1 ou 2, **caractérisé en ce que** les parties (NB1...3) du réseau (LAN) sont subdivisées en d'autres sous-parties, respectivement une partie des ressources de transmission (TR1,2) de l'au moins un trajet de liaison (VS1,2) étant affectée aux autres sous-parties.

4. Procédé selon l'une des revendications 1 à 3, **caractérisé en ce que** le réseau orienté paquets (LAN) représente l'internet ou un réseau d'accès à l'internet.

5. Procédé selon la revendication 4, **caractérisé en ce que** les zones d'adresses (AB) des parties (NB1...3) sont représentées par des parties (NB1...3) d'une adresse internet (IA).

6. Procédé selon l'une des revendications précédentes, **caractérisé en ce que** sont indiquées, dans le gestionnaire de ressources (RM), dans une table pour les routes (R1...n), respectivement
- une information sur la partie source (NB1...3),
- une information sur la partie de destination (NB1...3),
- des informations sur les parties intermédiaires (NB1...3) et
- des informations sur les trajets de liaison (VS1,2) entre les parties (NB1...3) des routes respectives (R1...n).

7. Procédé selon l'une des revendications précédentes, **caractérisé en ce que** les ressources de transmission prédéfinies (TR1,2), entre les parties (NB1...3), sont subdivisées en ressources partielles de transmission prédéfinies spécifiques aux services, la ressource partielle spécifique au service étant prise en compte lorsqu'il est vérifié si une liaison initialisée affectée à un service déterminé est autorisée.

8. Procédé selon l'une des revendications précédentes, **caractérisé en ce que**, dans le gestionnaire de ressources (RM), les ressources de transmission (TR) demandées par les liaisons initialisées (V), et autorisées, sont totalisées pour chaque trajet de liaison (VS1,2) entre les parties (NB1...3) et **en ce qu'**une liaison initialisée (V), dont la ressource de transmission (TR) demandée, compte tenu des ressources de transmission totalisées, dépasse les ressources de transmission (TR1,2) disponibles d'un trajet de liaison (V1,2) situé dans la route déterminée (R1...n), n'est pas autorisée.

9. Procédé selon l'une des revendications précédentes, **caractérisé en ce que** l'autorisation ou la non-autorisation est signalée à un terminal qui initialise la liaison.

10. Procédé selon l'une des revendications précédentes, **caractérisé en ce que** les ressources de transmission disponibles (TR1,2) sont déterminées par une information de largeur de bande ou par un nombre de liaisons avec une information donnée de largeur de bande.

11. Procédé selon l'une des revendications précédentes, **caractérisé en ce que**, dans le cas de plusieurs trajets de liaison (VS1,2) entre les parties (NB1...3), les ressources de transmission (TR1,2) sont prédéfinies pour chaque trajet de liaison (VS1,2) et constituent conjointement les ressources de transmission prédéfinies.

12. Procédé selon l'une des revendications précédentes, **caractérisé en ce que** des priorités de transmission différentes sont affectées aux zones d'adresses (AB).

13. Procédé selon l'une des revendications précédentes, **caractérisé en ce qu'**il est procédé à l'assurance de la qualité de service des liaisons (V) dans au moins l'une des parties (NB1...3) pour au moins une autre partie (NB1...3).
